# EUROPEAN PATENT APPLICATION

(11) **EP 4 752 948 A1**
(43) Date of publication of application: **03.06.2026**
(21) Application number: 25219418.8
(22) Date of filing: 28.11.2025
(51) Int. Cl.: H01M 4/13, H01M 4/133, H01M 4/139, H01M 4/1393, H01M 4/62, H01M 10/0525

(54) **DRY BINDER FOR RECHARGEABLE LITHIUM BATTERY, ELECTRODE FOR RECHARGEABLE LITHIUM BATTERY COMPRISING SAME AND RECHARGEABLE LITHIUM BATTERY COMPRISING SAME**

(30) Priority: 29.11.2024 KR 20240175746
(71) Applicant: SAMSUNG SDI CO., LTD., Yongin-si, Gyeonggi-do 17084 (KR); IUCF-HYU (Industry-University Cooperation Foundation Hanyang University), Seoul 04763 (KR)
(72) Inventor: JANG, Jaeyoung, 04763 Seoul (KR); KWON, Ilkyong, 17084 Yongin-si (KR); LEE, Jinhyon, 17084 Yongin-si (KR); PAIK, Ungyu, 04763 Seoul (KR); KIM, Minsung, 04763 Seoul (KR); KIM, Jiwoon, 04763 Seoul (KR); JEONG, Yeongje, 04763 Seoul (KR); LEE, Jieun, 04763 Seoul (KR)
(74) Representative: Marks & Clerk LLP

(57) **Abstract**

Disclosed are a dry binder for a rechargeable lithium battery, an electrode for a rechargeable lithium battery including the same, and a rechargeable lithium battery including the same, the dry binder including a modified polytetrafluoroethylene comprising carbon (C), fluorine (F), and oxygen (O), wherein the modified polytetrafluoroethylene has a ratio (I_{OH}/I_{CF2}) of a peak intensity (I_{OH}) corresponding to OH relative to a peak intensity (I_{CF2}) corresponding to CF₂ of about 0.03 to about 0.3 in an FT-IR spectrum measurement.

## Description

### BACKGROUND

### 1. Field

Embodiments of this disclosure relate to a dry binder for a rechargeable lithium battery, an electrode for a rechargeable lithium battery comprising the dry binder and a rechargeable lithium battery comprising the electrode.

### 2. Description of the Related Art

Recently, the rapid supplement of electronic devices such as mobile phones, laptop computers, and electric vehicles, using batteries have resulted in surprising increases in demands for rechargeable batteries having relatively high capacity and lighter weight. Accordingly, research and development to improve the performance of rechargeable lithium batteries is being actively conducted.

Rechargeable lithium batteries include a positive electrode and a negative electrode including an active material capable of intercalating and deintercalating lithium ions, and an electrolyte solution, and generate electrical energy through oxidation and reduction reactions if (e.g., when) lithium ions are intercalated and deintercalated into from the positive electrode and the negative electrode.

### SUMMARY

One or more embodiments of the present disclosure provide a dry binder for a rechargeable lithium battery which may improve the initial efficiency of the battery and the cycle-life characteristic.

Another embodiment provides an electrode for a rechargeable lithium battery including the dry binder.

Still another embodiment provides a rechargeable lithium battery including the electrode.

One or more embodiments provide a dry binder for a rechargeable lithium battery, including: a modified polytetrafluoroethylene including carbon (C), fluorine (F), and oxygen (O) (e.g., C, F, and O), wherein the modified polytetrafluoroethylene has a ratio (I_{OH}/I_{CF2}) of a peak intensity (I_{OH}) corresponding to OH (e.g., -OH) relative to a peak intensity (I_{CF2}) corresponding to CF₂ (e.g., -CF₂-) of about 0.03 to about 0.3 in an FT-IR spectrum measurement.

Another embodiment provides an electrode including the dry binder.

Still another embodiment provides a rechargeable lithium battery including the electrode and an electrolyte.

At least some of the above and other features of the invention are set out in the claims.

A dry binder according to one or more embodiments may provide an electrode that exhibits excellent initial efficiency and cycle-life characteristics, thereby providing a rechargeable lithium battery that exhibits excellent electrochemical characteristics.

### BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.
FIG. 1 to FIG. 4 are schematic views showing rechargeable lithium batteries according to some embodiments.
FIG. 5 is a photograph of the negative electrode according to Comparative Example 3.
FIG. 6 is a graph showing the FT-IR spectrum of the dry binders according to Example 1 and Comparative Example 1.
FIG. 7 is a graph showing the FT-IR spectrum of the dry binder according to Example 2.
FIG. 8 is a graph showing the FT-IR spectrum of the dry binder according to Example 3.
FIG. 9 is a graph showing the FT-IR spectrum of the dry binder according to Example 4.
FIG. 10 is a graph showing the FT-IR spectrum of the dry binder according to Example 5.
FIG. 11 is a graph showing the FT-IR spectrum of the dry binders according to Comparative Examples 1 to 4.
FIG. 12 is a graph showing once charging and discharging the half-cells according to Examples 1 and 5, and Comparative Example 1.
FIG. 13 is a dQ/dV plot of the half-cells according to Examples 1 and 5, and Comparative Example 1, during once charging and discharging.
FIG. 14 is a graph showing once charging and discharging the half-cell according to Comparative Example 1 and Comparative Example 2.
FIG. 15 is a dQ/dV plot of the half-cells according to Comparative Example 2, during once charging and discharging.

### DETAILED DESCRIPTION

Hereinafter, embodiments of the present disclosure will be described in more detail. However, these embodiments are merely examples, the present disclosure is not limited thereto, and the present disclosure is defined by the scope of the appended claims and equivalents thereof.

As used herein, if (e.g., when) specific definition is not otherwise provided, it will be understood that when an element such as a layer, film, region, or substrate is referred to as being "on" another element, it may be directly on the other element or intervening elements may also be present.

Unless otherwise specified in this specification, what is indicated in the singular may also include the plural. In embodiments, unless otherwise specified, "A or B" may mean "including A, including B, or including A and B".

As used herein, "combination thereof" may refer to a mixture, a laminate, a composite, a copolymer, an alloy, a blend, a reaction product, and/or the like of the constituents.

As used herein, if (e.g., when) a definition is not otherwise provided, the particle diameter may be an average particle diameter (e.g. average particle size). In embodiments, the particle diameter may refer to an average particle diameter (D₅₀), which means the diameter of particles having a cumulative volume of 50 volume% in the particle size distribution. The average particle diameter (D₅₀) may be measured by any suitable method generally used in the art, for example, by using a particle size analyzer, and/or by measuring using a transmission electron microscope (TEM) or a scanning electron microscope (SEM). In embodiments, a dynamic light-scattering measurement device may be used to perform a data analysis, and the number of particles may be counted for each particle size range. From this, the average particle diameter (D₅₀) value may be easily obtained through a calculation. In embodiments, the average particle diameter (D₅₀) may be measured using a laser diffraction method. If measuring by the laser diffraction method, for example, the particles to be measured may be dispersed in a dispersion medium, and then introduced into a commercially available laser diffraction particle diameter measuring device (e.g., Microtrac MT 3000), and ultrasonic waves of about 28 kHz at an output of 60 W are irradiated to calculate an average particle diameter (D₅₀) on the basis of 50% of the particle diameter distribution in the measuring device.

In some example embodiments, the average particle diameter may be measured by various suitable methods described above, for example, through a particle size analyzer.

In some example embodiments, the thickness may be measured using a scanning electron microscope (SEM) and/or transmission electron microscope (TEM) image of a cross-section, but the present disclosure is not limited thereto and may be measured using any suitable method that can measure thickness in the relevant field. The thickness may be an average thickness.

As used herein, soft carbon refers to a graphitizable carbon material that may be graphitized by heat treatment at high temperatures, for example 2800 °C, and hard carbon refers to non-graphitizable carbon material that is not graphitized by heat treatment. The soft carbon and hard carbon may be any suitable ones generally used in the art.

In one or more embodiments, crystalline carbon and amorphous carbon can be classified by X-ray diffraction analysis. The crystalline carbon may include natural graphite and/or artificial graphite. The natural graphite refers to naturally occurring graphite obtained by separation from minerals, and having, upon X-ray diffraction analysis, d002 of about 3.350 Å to about 3.360 Å. The artificial graphite refers to graphite made by graphitization and having, upon X-ray diffraction analysis, d002 of about 3.355 Å to about 3.365 Å. The amorphous carbon has a d002 of less than or equal to about 3.34 Å if (e.g., when) analyzed by X-ray diffraction. The X-ray diffraction analysis (XRD) uses CuKα ray as a target line and uses an X-ray diffraction analyzer, for example, X'Pert (manufacturer: Malvern Panalytical), and to improve peak intensity resolution, the monochromator equipment may be removed and measured. The measurement conditions may be 2θ=10 ° to 80 °, scan rate (°/s) = 0.044 to 0.089, and step size (°/step) = 0.013 to 0.039.

In one or more embodiments, an active mass density refers to a density of the active mass. The active mass represents a mixture including an active material and a binder, optionally, further including a conductive material (e.g., an electrically conductive material). For example, it refers to an active material layer on a current collector.

In one or more embodiments, a dry binder represents a binder which may prepare an electrode by a dry-process, without a solvent. For example, the binder refers to a binder utilized in dry electrodes, which is prepared using an active material layer composition formed by mixing an active material and a dry binder, and optionally a conductive material (e.g., an electrically conductive material), without a solvent.

The dry binder according to one or more embodiments includes a modified polytetrafluoroethylene including carbon (C), fluorine (F), and oxygen (O) (e.g., C, F, O, and hydrogen (H)) and the modified polytetrafluoroethylene has
a ratio (I_{OH}/I_{CF2}) of a peak intensity (I_{OH}) corresponding to OH (e.g., -OH) relative to a peak intensity (I_{CF2}) corresponding to CF₂ (e.g., -CF₂-) of about 0.03 to about 0.3 in an FT-IR spectrum measurement.

In one or more embodiments, the ratio (I_{OH}/I_{CF2}) of a peak intensity (I_{OH}) corresponding to OH (e.g., -OH) relative to a peak intensity (I_{CF2}) corresponding to CF₂ (e.g., -CF₂-) may be about 0.05 to about 0.3, or about 0.1 to about 0.2.

In one or more embodiments, the modified polytetrafluoroethylene may have a ratio (I_{OH}/I_{CF2}) of a peak intensity (I_{OH}) corresponding to OH (e.g., -OH) relative to a peak intensity (I_{CF2}) corresponding to CF₂ (e.g., -CF₂-) within the above ranges.

The peak intensity refers to absorbance. For example, a ratio (I_{OH}/I_{CF2}) of a peak intensity (I_{OH}) corresponding to OH (e.g., -OH) relative to a peak intensity (I_{CF2}) corresponding to CF₂ (e.g., -CF₂-) may represent a ratio of the absorbance of the OH (e.g., -OH) peak to that of the CF₂ (e.g., -CF₂-) peak. In such a modified polytetrafluoroethylene, -OH which is an electron donating group is presented and -F which is an electron withdrawing group is removed from the surface, thereby improving electrochemical stability. This enables embodiments of the present disclosure to provide batteries that exhibit excellent discharge capacity and cycle-life characteristics.

If the ratio (I_{OH}/I_{CF2}) of a peak intensity (I_{OH}) corresponding to OH (e.g., -OH) relative to a peak intensity (I_{CF2}) corresponding to CF₂ (e.g., -CF₂-) of the modified polytetrafluoroethylene is less than about 0.03, the above-described effects may be not sufficiently obtained. If the ratio (I_{OH}/I_{CF2}) of a peak intensity (I_{OH}) corresponding to OH (e.g., -OH) relative to a peak intensity (I_{CF2}) corresponding to CF₂ (e.g., -CF₂-) of the modified polytetrafluoroethylene exceeds about 0.3, it may not possible to prepare a dry negative electrode using it. General polytetrafluoroethylene includes little or no oxygen, and therefore exhibits almost no peak (I_{OH}) corresponding to OH (e.g., -OH) in an FT-IR spectrum measurement. Accordingly, if polytetrafluoroethylene exhibits the peak intensity ratio (I_{OH}/I_{CF2}), it may be determined that a surface of polytetrafluoroethylene has been modified.

In one or more embodiments, the FT-IR spectrum measurement may be measured using an FT-IR equipment (FT/IR-8X FV, Jasco) under the following conditions.
Measurement range: about 4000 cm⁻¹ to about 600 cm⁻¹
Analysis accessory: EasiDiff (Pike technologies)
Detector: TGS
Accumulation: 32 times

In the FT-IR spectrum of the modified polytetrafluoroethylene, which serves as the dry binder, the peaks corresponding to CF₂ (e.g., -CF₂-) and OH (e.g., -OH) may be observed. For example, in the FT-IR graph obtained from the measurement of the modified polytetrafluoroethylene, peaks related to CF₂ (e.g., -CF₂-) and OH (e.g., -OH) may appear.

In an FT-IR spectrum, the peak corresponding to CF₂ (e.g., -CF₂-) refers to a peak appearing at about 1280 cm⁻¹ to about 1290 cm⁻¹, and the peak corresponding to OH (e.g., -OH) refers to a peak appearing at about 3350 cm⁻¹ to about 3450 cm⁻¹.

The modified polytetrafluoroethylene according to one or more embodiments may be a chemically bonded compound of polytetrafluoroethylene and an amine-based compound. The amine-based compound may be methanol amine, ethanolamine, propanolamine, butanolamine (e.g., 4-amino-1-butanol), ethylenediamine, or a combination thereof.

A method of preparing such a modified polytetrafluoroethylene will be illustrated herein in more detail.

Polytetrafluoroethylene may be added to a solvent to prepare a polytetrafluoroethylene liquid. The solvent may be a solvent that does not dissolve polytetrafluoroethylene, but has chemical affinity toward polytetrafluoroethylene, such that it is capable of swelling polytetrafluoroethylene.

The solvent may be, for example, acetone, diglyme, tetrahydrofuran, 2,2-trifluoroethanol, toluene, ethyl acetate, ethanol, 2-methoxy ethanol, methyl acetate, 1-dodecanethiol, butylamine, triethylamine, chloroform, 1-propanol, 1-hexanol, 1-octanol, tert-butanol, methyl ethyl ketone, methyl isobutyl ketone, pyridine, diethyl ether, methyl t-butyl ether, dimethyl carbonate, diethyl carbonate, or a combination thereof.

An amount of the added polytetrafluoroethylene may be about 1 g to about 50 g, about 5 g to about 30 g, or about 10 g to about 20 g per 100 ml of the solvent. If the amount of added polytetrafluoroethylene is within the foregoing ranges, the swelling caused by the solvent may further enhance the reactivity of the polytetrafluoroethylene with an amine-based compound.

Thereafter, an amine-based compound may be added to the polytetrafluoroethylene liquid to prepare a mixture. The amine-based compound may be in a liquid state at a room temperature and examples thereof may be methanol amine, ethanol amine, propanol amine, butanol amine, ethylene diamine, or a combination thereof.

An amount of the amine-based compound may be equal to that of the solvent.

Thereafter, the resulting mixture may be heat-treated. The heat-treatment may be carried out at about 60 °C to about 300 °C, or about 60 °C to about 200 °C, or about 60 °C to about 150 °C.

The heat-treatment may be carried out for about 10 minutes to about 30 hours, about 10 minutes to about 25 hours, or about 10 minutes to about 24 hours.

The heat-treatment may be carried out in an oxygen (O₂) atmosphere, a nitrogen (N₂) atmosphere, or a combination thereof.

The heat-treated product may undergo a washing to prepare a modified polytetrafluoroethylene.

The washing may be carried out using water. The washing may be carried out at least once and no more than about ten times.

Before washing, the heat-treated product may be cooled to a room temperature (about 20 °C to about 25 °C).

Furthermore, the washed product may be dried, and the washed product may be further filtrated. The filtrating may be carried out using a polytetrafluoroethylene filter. The filter may have a size capable of separating a product having an average size of about 0.2 µm to about 0.45 µm. For example, the filter may have pores or apertures capable of separating a product having an average size of about 0.2 µm to about 0.45 µm.

The dry binder according to one or more embodiments may be applied to a negative electrode or a positive electrode, or may also be applied to both the negative electrode and the positive electrode. In another embodiments, the dry binder may be applied to the negative electrode.

### Electrode

An electrode according to one or more embodiments includes the dry binder and an active material. In one or more embodiments, the dry binder and the active material are included in an active material layer. The electrode includes a current collector that supports the active material layer.

The electrode according to one or more embodiments may be a negative electrode or a positive electrode, or both the negative electrode and the positive electrode.

If the electrode according to one or more embodiments is the negative electrode, the negative electrode active material layer may include or consist of the dry binder and the negative electrode active material, optionally a conductive material (e.g., an electrically conductive material), and does not include an additional binder other than the dry binder.

Based on 100 wt% of the negative electrode active material layer, an amount of the dry binder may be about 0.5 wt% to about 10 wt%, or about 0.5 wt% to about 5 wt%. An amount of the negative electrode active material may be, based on 100 wt% of the negative electrode active material layer, about 90 wt% to about 99.5 wt%, or about 95 wt% to about 99.5 wt%.

In one or more embodiments, the negative electrode active material layer may include a conductive material (e.g., an electrically conductive material) and herein, the negative electrode active material layer may include the negative electrode active material at about 90 wt% to about 99 wt%, the binder at about 0.5 wt% to about 5 wt%, and the conductive material at about 0.5 wt% to about 5 wt%.

The negative electrode active material may include a material that reversibly intercalates/deintercalates lithium ions, a lithium metal, a lithium metal alloy, a material capable of doping/dedoping lithium, and/or a transition metal oxide.

The material that reversibly intercalates/deintercalates lithium ions may be a carbon-based material, and, for example, crystalline carbon, amorphous carbon, or a combination thereof. The crystalline carbon may be unspecified shaped, sheet, flake, spherical, and/or fiber shaped natural graphite and/or artificial graphite, and the amorphous carbon may be a soft carbon, a hard carbon, a mesophase pitch carbonization product, fired coke, and/or the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode material, and/or a Sn-based negative electrode active material. The Si-based negative electrode active material may be silicon, a Si-C composite, SiOₓ (0 <x≤2), a Si-Q alloy (wherein Q is an element selected from an alkali metal, an alkaline-earth metal, a Group 13 element, a Group 14 element (except for Si) a Group 15 element, a Group 16 element, a transition metal, a rare earth element, and a combination thereof), or a combination thereof. The Sn-based negative electrode active material may be Sn, SnO₂, a Sn-based alloy, or a combination thereof.

The silicon-carbon composite may be a composite of silicon and amorphous carbon. According to one or more embodiments, the silicon-carbon composite may include silicon particles and an amorphous carbon coated on the surface of the silicon particle. For example, the silicon-carbon composite may include a secondary particle in which silicon primary particles are agglomerated and an amorphous carbon coating layer (shell) on the secondary particle. The amorphous carbon may also be between the silicon primary particles, for example, the silicon primary particles may be coated with the amorphous carbon. The secondary particles may be distributed in an amorphous carbon matrix.

The silicon-carbon composite may also include a core in which silicon particles are distributed in an amorphous carbon matrix and an amorphous carbon coating layer coated on a surface of the core.

The secondary particle may be at the center of the Si-C composite, so it may be referred as a core or a center part. The amorphous carbon coating layer may be referred to as an outer part or a shell.

The silicon particles may be nano silicon particles. The nano silicon particles may have an average particle diameter of about 10 nm to about 1,000 nm, and according to one or more embodiments, may be about 20 nm to about 900 nm, about 20 nm to about 800 nm, about 20 nm to about 500 nm, about 20 nm to about 300 nm, or about 20 nm to about 150 nm. If the average particle diameter of the silicon particles is within the foregoing ranges, the extreme volume expansion caused during charge and discharge may be suppressed or reduced, and a breakage of the conductive path (e.g., an electrically conductive path) due to crushing of particle during charging and discharging may be prevented or reduced.

In embodiments, a mixing ratio of the nano silicon particles and amorphous carbon may be about 20:80 to about 70:30 by weight ratio.

In one or more embodiments, the silicon-carbon composite may further include crystalline carbon. For example, the silicon-carbon composite may include a core including crystalline carbon and silicon particles, and an amorphous carbon coating layer on the surface of the core.

If the silicon-carbon composite includes the silicon particles, crystalline carbon, and amorphous carbon, an amount of the amorphous carbon may be about 30 wt% to about 70 wt% based on 100 wt% of the silicon-carbon composite, and an amount of the crystalline carbon may be about 1 wt% to about 20 wt% based on 100 wt% of the silicon-carbon composite. An amount of the silicon particle may be, based on 100 wt% of the silicon-carbon composite, about 20 wt% to about 69 wt%, or according to one or more embodiments, may be about 30 wt% to about 60 wt%.

The particle diameter of the silicon-carbon composite may be suitably or appropriately adjusted, and it is not limited thereto.

If the amorphous carbon is present surrounding the surface of the secondary particles, its thickness may be adjusted suitably appropriately, and may exist, for example, at a thickness of about 5 nm to about 100 nm.

The Si-based negative electrode active material and/or the Sn-based negative electrode active material may be used together with a carbon-based negative electrode active material.

The conductive material is included to provide electrode conductivity (e.g., electrical conductivity), and any suitable electrically conductive material may be used as a conductive material unless it causes a chemical change (e.g., an undesirable chemical change in the rechargeable lithium battery). Examples of the conductive material may be a carbon-based material such as natural graphite, artificial graphite, carbon black, acetylene black, ketjen black, a carbon fiber, a carbon nanofiber, carbon nanotube, and/or the like; a metal-based material of a metal powder and/or a metal fiber including copper, nickel, aluminium, silver, and/or the like; a conductive polymer (e.g., an electrically conductive polymer) such as a polyphenylene derivative; or a mixture thereof.

The negative current collector may include one selected from a copper foil, a nickel foil, a stainless steel foil, a titanium foil, a nickel foam, a copper foam, a polymer substrate coated with a conductive metal (e.g., an electrically conductive metal), and a combination thereof. In embodiments, a current collector coated with an aqueous binder or a non-aqueous binder on the surface of a substrate, may also be used.

The aqueous binder may include a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinyl pyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acryl resin, a phenol resin, an epoxy resin, polyvinyl alcohol, carboxymethyl cellulose, hydroxypropyl cellulose, diacetyl cellulose, or a combination thereof.

The non-aqueous binder may include, polyvinylchloride, carboxylated polyvinyl chloride, polyvinyl fluoride, polyurethane, polytetrafluoroethylene, polyvinylidene fluoride, polyethylene, polypropylene, (meth)acryl resin, polyester resin, nylon, or combination thereof. The coating thickness of the aqueous binder or the non-aqueous binder may be suitably or appropriately adjusted.

If the electrode according to one or more embodiments is the positive electrode, the positive electrode active material layer may include the dry binder, the positive electrode active material, and the conductive material, and may further include the aqueous binder, the non-aqueous binder, or a combination thereof.

Based on 100 wt% of the positive electrode active material layer, an amount of the dry binder may be about 0.5 wt% to about 5 wt%, or about 0.5 wt% to about 3 wt%. An amount of the positive electrode active material may be, based on 100 wt% of the positive electrode active material layer, about 90 wt% to about 99 wt%, or about 94 wt% to about 99 wt%. An amount of the conductive material may be about 0.5 wt% to about 5 wt%, or about 0.5 wt% to about 3 wt%.

The positive electrode active material may be a lithiated intercalation compound that reversibly intercalates and deintercalates lithium ions. In one or more embodiments, one or more composite oxides of a metal selected from cobalt, manganese, nickel, and a combination thereof, and lithium, may be used.

The composite oxide may be a lithium transition metal composite oxide, and examples may include a lithium nickel-based oxide, a lithium cobalt-based oxide, a lithium manganese-based oxide, a lithium iron phosphate-based compound, a cobalt-free lithium nickel-manganese-based oxide, or a combination thereof.

As an example, a compound represented by any of the following chemical formulas may be usZed. LiₐA_{1-b}X_{b}O₂-_{c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α <2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8).

In the above chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

For example, the positive electrode active material may be a high nickel-based positive electrode active material having a nickel amount of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material can realize high capacity and can be applied to a high-capacity, high-density rechargeable lithium battery.

The binder serves to attach the positive electrode active material particles well to each other and also to attach the positive electrode active material well to the current collector. Non-limiting examples of the binder may include polyvinyl alcohol, carboxymethyl cellulose, hydroxypropyl cellulose, diacetyl cellulose, polyvinyl chloride, carboxylated polyvinylchloride, polyvinyl fluoride, an ethylene oxide-containing polymer, polyvinyl pyrrolidone, polyurethane, polytetrafluoroethylene, polyvinylidene fluoride, polyethylene, a polypropylene, styrene-butadiene rubber, a (meth)acrylated styrene-butadiene rubber, an epoxy resin, a (meth)acrylic resin, polyester resin, and nylon, but are not limited thereto.

The conductive material may be included to provide electrode conductivity (e.g., electrical conductivity) for the positive electrode, and any electrically conductive material may be used as a conductive material (e.g., an electrically conductive material) unless it causes a chemical change (e.g., causes an undesirable chemical change in the rechargeable lithium battery). Non-limiting examples of the conductive material may include a carbon-based material such as natural graphite, artificial graphite, carbon black, acetylene black, Ketjen black, a carbon fiber, a carbon nanofiber, a carbon nanotube, and the like; a metal-based material of a metal powder and/or a metal fiber including copper, nickel, aluminium, silver, and/or the like; a conductive polymer (e.g., an electrically conductive polymer) such as a polyphenylene derivative; or a mixture thereof.

The current collector may include Al, but is not limited thereto. A current collector coated with an aqueous binder or a non-aqueous binder on the surface of an Al substrate, may also be used. The aqueous binder may include a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinyl pyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acryl resin, a phenol resin, an epoxy resin, polyvinyl alcohol, carboxymethyl cellulose, hydroxypropyl cellulose, diacetyl cellulose or a combination thereof.

The non-aqueous binder may include, polyvinylchloride, carboxylated polyvinyl chloride, polyvinyl fluoride, polyurethane, polytetrafluoroethylene, polyvinylidene fluoride, polyethylene, polypropylene, (meth)acryl resin, polyester resin, nylon, or combination thereof.

The coating thickness of the aqueous binder or the non-aqueous binder may be suitably or appropriately adjusted.

### Rechargeable lithium battery

Another embodiment provides a rechargeable lithium battery including an electrode and an electrolyte.

The electrode includes the dry binder according to one or more embodiments and an active material, and may be the negative electrode, or the positive electrode. If the electrode is the negative electrode, the positive electrode may be a general positive electrode, or the positive electrode including the dry binder according to one or more embodiments. In another embodiment, if the electrode is the positive electrode, the negative electrode may be a general negative electrode, or the negative electrode including the dry binder according to one or more embodiments.

### Electrolyte

The electrolyte includes a non-aqueous organic solvent and a lithium salt.

The non-aqueous organic solvent serves as a medium to transmit ions taking part in the electrochemical reaction of a battery.

The non-aqueous organic solvent may be a carbonate-based, ester-based, ether-based, ketone-based, and/or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like.

The ester-based solvent may include methyl acetate, ethyl acetate, n-propyl acetate, dimethyl acetate, methyl propionate, ethyl propionate, decanolide, γ-butyrolactone, mevalonolactone, valerolactone, caprolactone, and/or the like.

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, and may include a double bond, an aromatic ring, and/or an ether group, and/or the like); amides such as dimethylformamide; dioxolanes such as 1,3-dioxolane, 1,4-dioxolane, and/or the like; sulfolanes, and/or the like.

The non-aqueous organic solvent may be utilized alone or in a mixture of two or more types (or kinds).

If using the carbonate-based solvent, a cyclic carbonate and a chain carbonate may be mixed and used, and the cyclic carbonate and the chain carbonate may be mixed in a volume ratio of about 1:1 to about 1:9.

The electrolyte may further include vinylethylene carbonate, vinylene carbonate, difluoroethylene carbonate, chloroethylene carbonate, dichloroethylene carbonate, bromoethylene carbonate, dibromoethylene carbonate, nitroethylene carbonate, cyanoethylene carbonate, fluoroethylene carbonate, or a combination thereof as an additive.

The lithium salt dissolved in the organic solvent supplies lithium ions in a battery, enables a basic operation of a rechargeable lithium battery, and improves transportation of the lithium ions between positive and negative electrodes. Non-limiting examples of the lithium salt may include at least one selected from LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of about 1 to about 20), lithium trifluoromethane sulfonate, lithium tetrafluoroethane sulfonate, lithium difluorobis(oxalate) phosphate (LiDFBOP), and lithium bis(oxalate) borate (LiBOB).

### Separator

Depending on the type (or kind) of the rechargeable lithium battery, a separator may be present between the positive electrode and the negative electrode. Such a suitable separator material may include polyethylene, polypropylene, polyvinylidene fluoride, and multi-layers thereof such as a polyethylene/polypropylene double-layered separator, a polyethylene/polypropylene/polyethylene triple-layered separator, and/or a polypropylene/polyethylene/polypropylene triple-layered separator.

The separator may include a porous substrate and a coating layer including an organic material, an inorganic material, or a combination thereof on one or both surfaces (e.g., two opposing surfaces) of the porous substrate.

The porous substrate may be a film formed of any one selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, polytetrafluoroethylene (TEFLON), or a copolymer or mixture of two or more thereof.

The organic material may include a polyvinylidene fluoride-based polymer and/or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked.

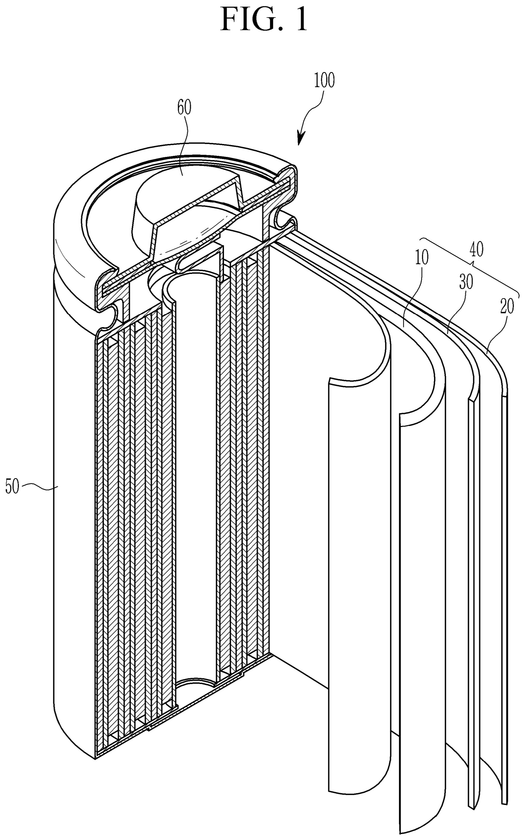

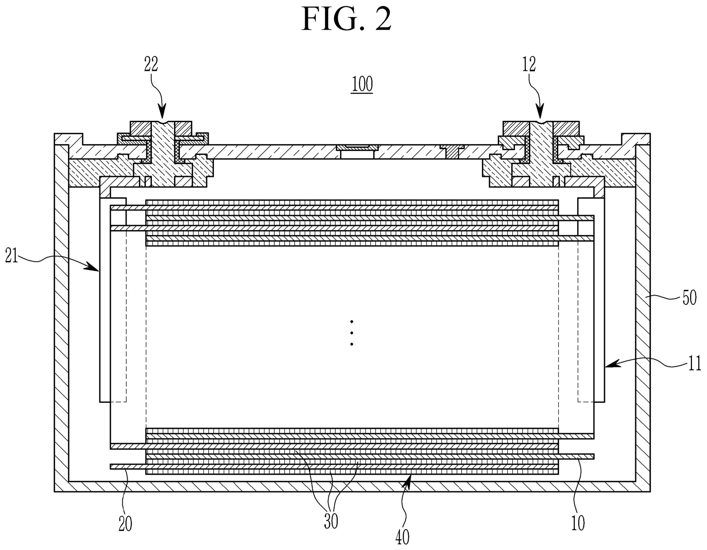

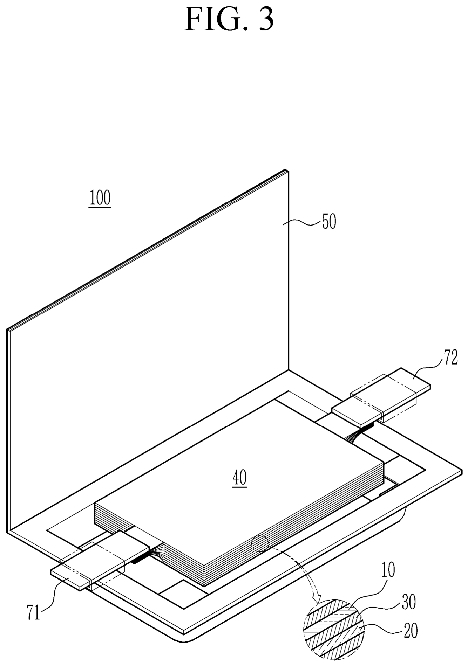

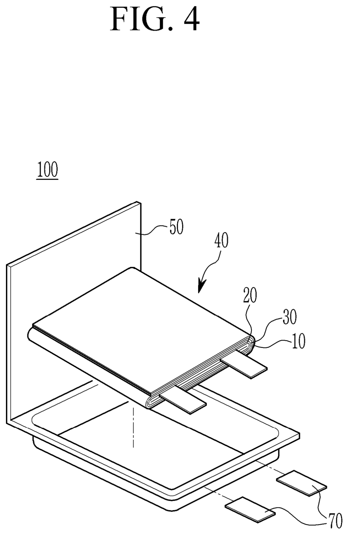

The rechargeable lithium battery may be classified into cylindrical, prismatic, pouch, and/or coin types (or kinds) depending on its shape. FIGS. 1 to 4 are schematic views illustrating a rechargeable lithium battery according to some example embodiments. FIG. 1 shows a cylindrical battery, FIG. 2 shows a prismatic battery, and FIGS. 3 and 4 show pouch-type batteries. Referring to FIGS. 1 to 4, the rechargeable lithium battery 100 includes an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte. The rechargeable lithium battery 100 may include a sealing member 60 that seals the case 50 as shown in FIG. 1. In FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 includes an electrode tab 70 (FIG. 4), for example, a positive electrode tab 71 and a negative electrode tab 72 (FIG. 3) that serve as an electrical path to induce the current formed in the electrode assembly 40 to the outside.

The rechargeable lithium battery according to one or more embodiments may be applied to automobiles, mobile phones, and/or various suitable types (or kinds) of electric devices, but the present disclosure is not limited thereto.

Hereinafter, examples of the present disclosure and comparative examples are described. These examples, however, are not in any sense to be interpreted as limiting the scope of the present disclosure.

### Example 1

1 g of polytetrafluoroethylene powder was added to acetone (5 ml) to prepare a polytetrafluoroethylene liquid. Ethanolamine (5ml) was added to the polytetrafluoroethylene liquid to prepare a mixture.

The mixture was heated under an oxygen atmosphere at 100 °C for 3 hours and then cooled at a room temperature (25 °C). The resultant cooled product was washed twice with water and then filtered using a polytetrafluoroethylene filter (average size: 0.2 µm) to obtain a product having a size of 0.2 µm.

Thereafter, the obtained product was dried to prepare a modified polytetrafluoroethylene.

97.5 wt% of artificial graphite and 2.5 wt% of the resulting modified polytetrafluoroethylene dry binder were dry-mixed and the mixture was extruded to prepare a sheet-type-self-standing negative electrode active material layer.

The negative electrode active material layer was adhered to a copper current collector coated with styrene-butadiene-rubber to prepare a negative electrode. In the prepared negative electrode, the loading level of the negative electrode active material layer was 21.93 mg/cm² and the active mass density was 1.35 g/cc.

The negative electrode, a lithium metal counter electrode, and an electrolyte were used to fabricate a half-cell. As the electrolyte, a 1M LiPF₆ dissolved in a mixed solvent of ethylene carbonate and diethyl carbonate (50:50 by volume ratio) was used.

### Example 2

A modified polytetrafluoroethylene was prepared by the substantially same manner as in Example 1, except that the heating was conducted for 6 hours.

A negative electrode and a half-cell were fabricated by the substantially same manner as in Example 1 using the modified polytetrafluoroethylene.

### Example 3

A modified polytetrafluoroethylene was prepared by the substantially same manner as in Example 1, except that the heating was conducted for 12 hours.

A negative electrode and a half-cell were fabricated by the substantially same manner as in Example 1 using the modified polytetrafluoroethylene.

### Example 4

A modified polytetrafluoroethylene was prepared by the substantially same manner as in Example 1, except that the heating was conducted for 24 hours.

A negative electrode and a half-cell were fabricated by the substantially same manner as in Example 1 using the modified polytetrafluoroethylene.

### Example 5

A modified polytetrafluoroethylene was prepared by the substantially same manner as in Example 1, except that the heating was conducted for 24 hours and the acetone solvent was replaced by diglyme.

A negative electrode and a half-cell were fabricated by the substantially same manner as in Example 1 using the modified polytetrafluoroethylene.

### Comparative Example 1

97.5 wt% of artificial graphite and 2.5 wt% of a polytetrafluoroethylene dry binder were dry-mixed and the mixture was extruded to prepare a sheet-type-self-standing negative electrode active material layer.

The negative electrode active material layer was adhered to a copper current collector coated with styrene-butadiene-rubber to prepare a negative electrode. In the prepared negative electrode, the loading level of the negative electrode active material layer was 21.93 mg/cm² and the active mass density was 1.35 g/cc.

The negative electrode, a lithium metal counter electrode, and an electrolyte were used to fabricate a half-cell. As the electrolyte, a 1M LiPF₆ dissolved in a mixed solvent of ethylene carbonate and diethyl carbonate (50:50 by volume ratio) was used.

### Comparative Example 2

1 g of polytetrafluoroethylene powder was added to ethanolamine (5 ml) to prepare a mixture.

The mixture was heated at 100 °C for 24 hours and then cooled at a room temperature (25 °C).

The resultant cooled product was washed twice with water and then filtered using a polytetrafluoroethylene filter to obtain a product with a size of 0.2 µm.

Thereafter, the obtained product was dried to prepare a modified polytetrafluoroethylene.

97.5 wt% of artificial graphite and 2.5 wt% of the resulting modified polytetrafluoroethylene dry binder were dry-mixed and the mixture was extruded to prepare a sheet-type-self-standing negative electrode active material layer.

The negative electrode active material layer was adhered to a copper current collector coated with styrene-butadiene-rubber to prepare a negative electrode. In the prepared negative electrode, the loading level of the negative electrode active material layer was 21.93 mg/cm² and the active mass density was 1.35 g/cc.

The negative electrode, a lithium metal counter electrode, and an electrolyte were used to fabricate a half-cell. As the electrolyte, a 1M LiPF₆ dissolved in a mixed solvent of ethylene carbonate and diethyl carbonate (50:50 by volume ratio) was used.

### Comparative Example 3

A modified polytetrafluoroethylene was prepared by the substantially same manner as in Example 1, except that the heating was conducted for 48 hours.

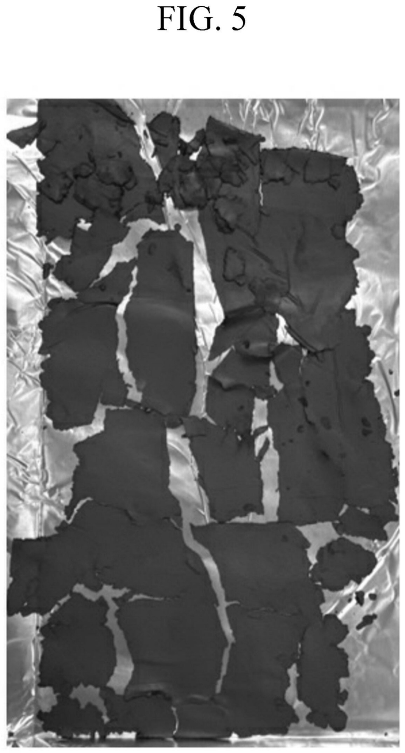

The modified polytetrafluoroethylene was used as a dry binder, and the same procedure as in Example 1 was performed. However, as shown in FIG. 5, a broken negative electrode was obtained, which could not be used as the negative electrode. Consequently, a half-cell could not be fabricated.

### Comparative Example 4

A modified polytetrafluoroethylene was prepared by the substantially same manner as in Example 1, except that the heating was conducted for 120 hours.

The modified polytetrafluoroethylene was used as a dry binder, and the same procedure as in Example 1 was performed, but a negative electrode and a half-cell could not be fabricated.

### Experimental Example 1) Evaluation of FT-IR

FT-IR analysis of the dry binders of Examples 1 to 4 and Comparative Examples 1 to 4 was conducted using a FT-IR equipment (FT/IR-8X FV, Jasco) under the following conditions.
Measurement range: 4000 - 600 cm⁻¹
Analysis accessary: EasiDiff (Pike technologies)
Detector: TGS
Accumulation: 32 times

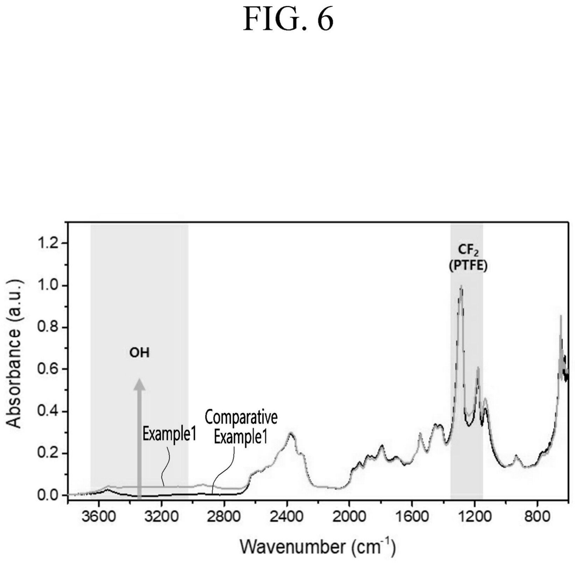

Among the obtained measurement spectra, the FT-IR spectra of Example 1 and Comparative Example 1 are shown in FIG. 6. As shown in FIG. 6, it can be seen that Example 1 exhibited a stronger -OH-related peak at 3391 cm⁻¹ compared to that of Comparative Example 1.

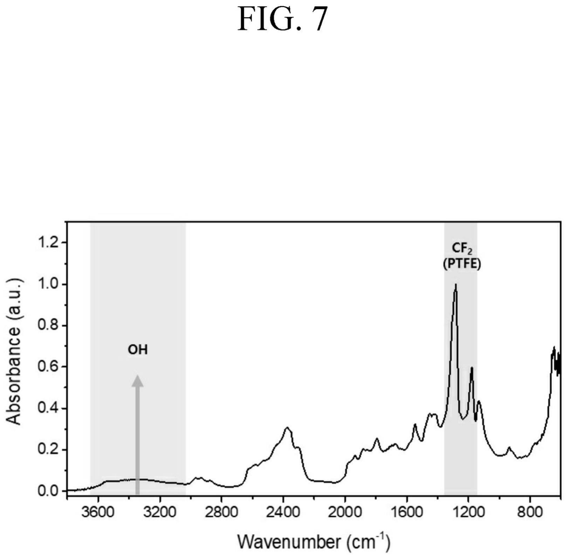

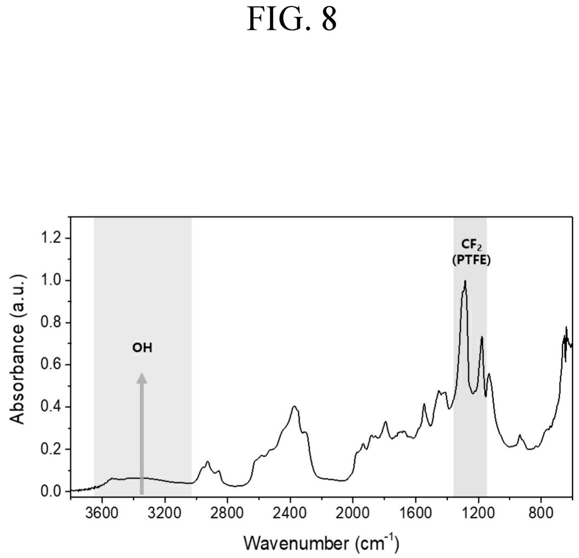

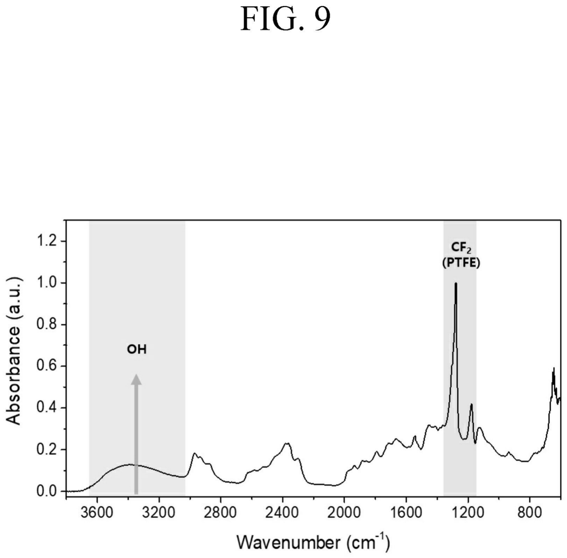

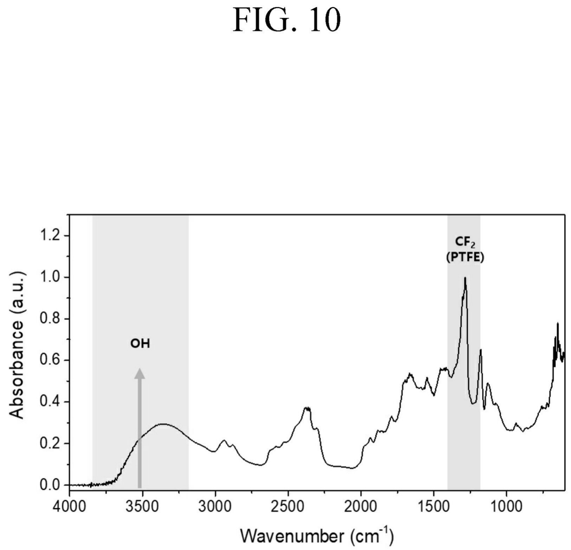

The FT-IR spectrum of Example 2 is shown in FIG. 7, the FT-IR spectrum of Example 3 is shown in FIG. 8, the FT-IR spectrum of Example 4 is shown in FIG. 9, and the FT-IR spectrum of Example 5 is shown in FIG. 10.

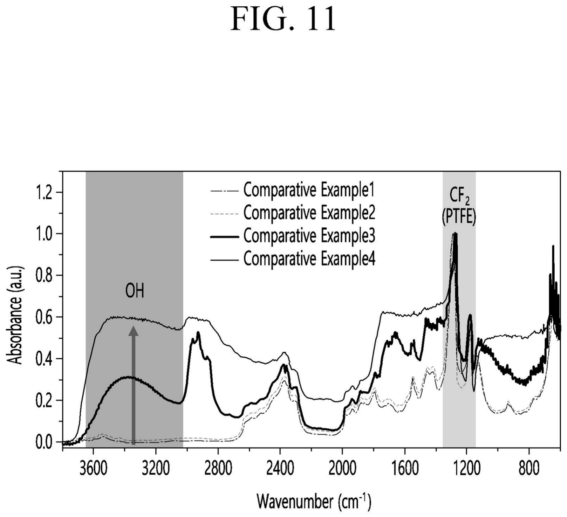

The FT-IR spectra of Comparative Examples 2 to 4 are shown in FIG. 11. For comparison, the result of Comparative Example 1 was also shown in FIG. 11.

From the results shown in FIG. 7 to FIG. 11, it can be seen that the binders of Examples 2 to 5, and Comparative Examples 3 and 4 exhibited a stronger -OH-related peak at 3391 cm⁻¹ compared to that of Comparative Example 1. The binder of Comparative Example 2 exhibited the -OH-related peak at 3391 cm⁻¹, which was almost identical to that observed in Comparative Example 1.

From the resulting measurement spectrum, the absorbance ratio (I_{OH}/I_{CF2}), e.g., the peak intensity ratio (I_{OH}/I_{CF2}) of the -OH-related peak at 3391 cm⁻¹, and the - CF₂-related peak at 1286 cm⁻¹, was calculated. The results are shown in Table 1.

**Table 1**

| | I_{OH}/I_{CF2} |
|---|---|
| Example 1 | 0.0392 |
| Example 2 | 0.0553 |
| Example 3 | 0.0632 |
| Example 4 | 0.1277 |
| Example 5 | 0.2919 |
| Comparative Example 1 | 0.0015 |
| Comparative Example 2 | 0.0096 |
| Comparative Example 3 | 0.3138 |
| Comparative Example 4 | 0.5945 |

As shown in Table 1, the dry binder of Examples 1 to 5 exhibited the ratio (I_{OH}/I_{CF2}) of a peak intensity (I_{OH}) corresponding to OH (e.g., -OH) relative to a peak intensity (I_{CF2}) corresponding to CF₂ (e.g., -CF₂-) of 0.0392 to 0.2919.

Whereas, the dry binders of Comparative Example 1 and Comparative Example 2 exhibited very low peak intensity ratios (I_{OH}/I_{CF2}) of 0.0015 and 0.0096, respectively, while those of Comparative Examples 3 and 4 exhibited significantly high values of 0.3138 and 0.5925, respectively.

### Experimental Example 2) Evaluation of Initial efficiency

The half-cells according to Examples 1 to 5 and Comparative Examples 1 and 2 were once charged and discharged at 0.1 C. The measured charge capacity and discharge capacity are shown in Table 2. A ratio of discharge capacity relative to charge capacity was calculated. The results are shown in Table 2 as initial efficiency.

**Table 2**

| | Charge capacity (mAh/g) | Discharge capacity (mAh/g) | Initial efficiency (%) |
|---|---|---|---|
| Example 1 | 382.2 | 346.1 | 90.5 |
| Example 2 | 377.3 | 342.7 | 91.5 |
| Example 3 | 373.9 | 341.2 | 91.3 |
| Example 4 | 377.5 | 348.1 | 92.2 |
| Example 5 | 363.9 | 343.2 | 94.5 |
| Comparative Example 1 | 393.9 | 345.8 | 87.8 |
| Comparative Example 2 | 358.1 | 333.8 | 93.2 |

As shown in Table 2, the cells according to Examples 1 to 5 exhibited high charge capacity and discharge capacity, and excellent initial efficiency.

Whereas, Comparative Example 1 exhibited significantly deteriorated initial efficiency and Comparative Example 2 exhibited significantly dropped charge capacity and discharge capacity.

### Experimental Example 3) Evaluation of dQ/dV (differential capacity)

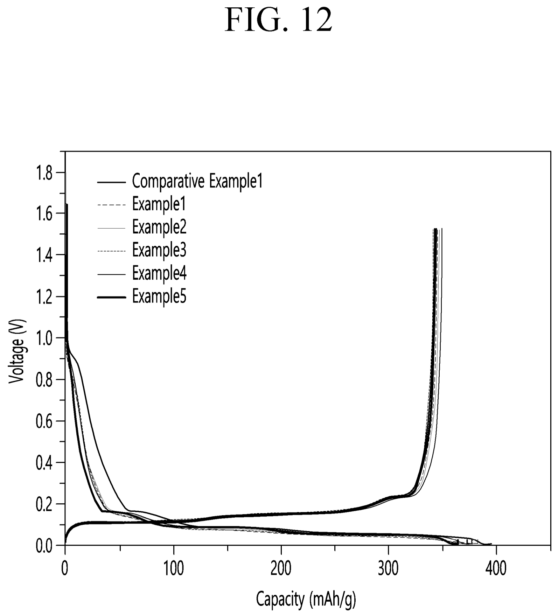

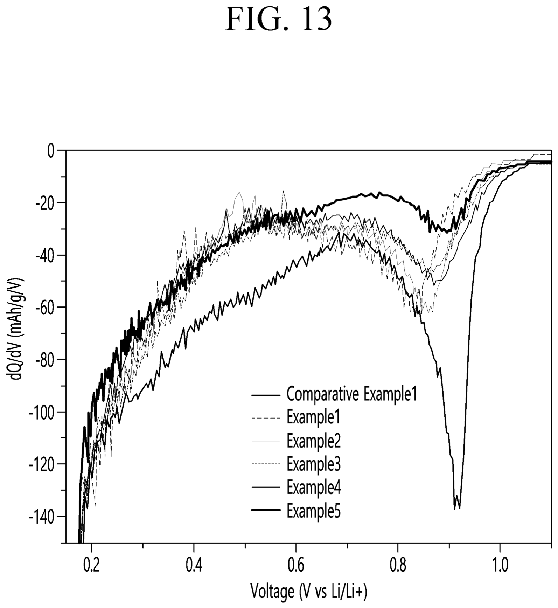

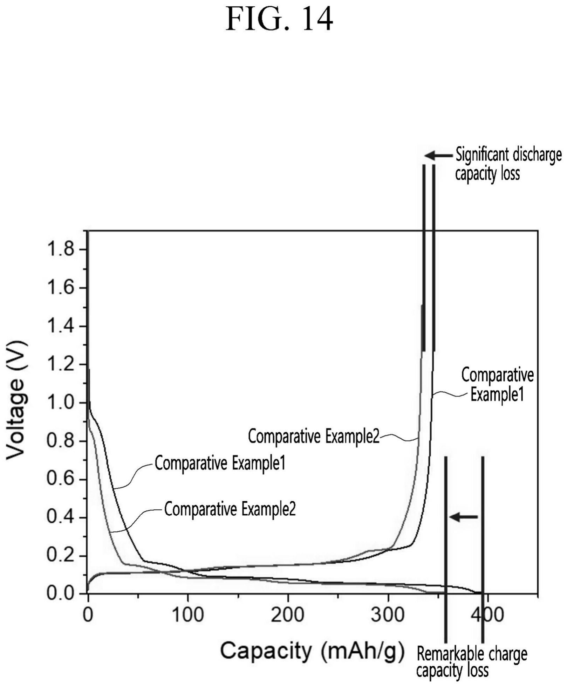

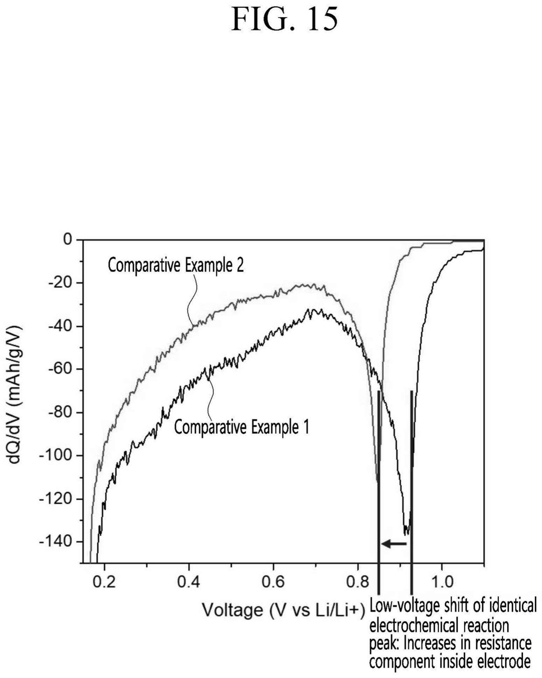

The half-cells according to Examples 1 to 5, and Comparative Examples 1 and 2 were charged and discharged once at 0.05 C. A graph was plotted showing the voltage versus the lithium metal (V, x axis) and the values obtained by differentiating the charge and discharge capacity with respect to the voltage (dQ/dV, y axis). From these results, the charge and discharge curves of Examples 1 to 5 and Comparative Example 1 after one cycle are shown in FIG. 12 and the charge and discharge curve of Comparative Example 1 and Comparative Example 2 are shown in FIG. 14. The differential capacity (dQ/dV, side reaction region) of Examples 1 to 5 and Comparative Example 1 are shown in FIG. 13, and the differential capacity (dQ/dV, side reaction region) of Comparative Example 2 is shown in FIG. 15. For comparison, the result of Comparative Example 1 is also shown in FIG. 14 and FIG. 15.

As shown in FIG. 12, the cells according to Examples 1 to 5 exhibited slightly lower charge capacity compared to Comparative Example 1, but showed similar discharge capacity, indicating excellent initial efficiency. From FIG. 14, Comparative Example 2 exhibited a significantly reduced charge and discharge capacity, particularly, a notable decrease in charge capacity.

As shown FIG. 13, the cells according to Examples 1 to 5 exhibited smaller peak area compared to Comparative Example 1 (in FIG. 13, the boldest line positioned at the top of graph represented the result of Example 5). From there results, it can be seen that fewer side reactions occurred. As shown in FIG. 15, in Comparative Example 2, the electrode side reaction occurred at a lower potential, indicating that the electrode resistance (e.g., electrode electrical resistance) was significantly increased.

While the subject matter of this disclosure has been described in connection with what is presently considered to be practical example embodiments, it is to be understood that the present disclosure is not limited to the disclosed embodiments. On the contrary, the present disclosure is intended to cover various suitable modifications and equivalent arrangements included within the scope of the appended claims and equivalents thereof.

## Claims

1. A dry binder for a rechargeable lithium battery, comprising:
a modified polytetrafluoroethylene comprising carbon, fluorine, and oxygen,
wherein the modified polytetrafluoroethylene has:
a ratio (I_{OH}/I_{CF2}) of a peak intensity (I_{OH}) corresponding to OH relative to a peak intensity (I_{CF2}) corresponding to CF₂ of about 0.03 to about 0.3 in an FT-IR spectrum measurement.

2. The dry binder for a rechargeable lithium battery as claimed in claim 1, wherein the ratio (I_{OH}/I_{CF2}) of a peak intensity (I_{OH}) corresponding to OH relative to a peak intensity (I_{CF2}) corresponding to CF₂ is about 0.05 to about 0.3.

3. The dry binder for a rechargeable lithium battery as claimed in claim 1, wherein the ratio (I_{OH}/I_{CF2}) of a peak intensity (I_{OH}) corresponding to OH relative to a peak intensity (I_{CF2}) corresponding to CF₂ is about 0.1 to about 0.2.

4. The dry binder for a rechargeable lithium battery as claimed in any one of claims 1 to 3, wherein the modified polytetrafluoroethylene is a chemically bonded compound of polytetrafluoroethylene and an amine-based compound.

5. The dry binder for a rechargeable lithium battery as claimed in claim 4, wherein the amine-based compound comprises ethanolamine, propanolamine, butanolamine, ethylenediamine, or a combination thereof.

6. The dry binder for a rechargeable lithium battery as claimed in any one of claims 1 to 5, wherein the peak corresponding to CF₂ is a peak appearing at about 1280 cm⁻¹ to about 1290 cm⁻¹.

7. The dry binder for a rechargeable lithium battery as claimed in any one of claims 1 to 6, wherein the peak corresponding to OH is a peak appearing at about 3350 cm⁻¹ to about 3450 cm⁻¹.

8. The dry binder for a rechargeable lithium battery as claimed in any one of claims 1 to 7, wherein the modified polytetrafluoroethylene is prepared by adding polytetrafluoroethylene to a solvent to prepare a polytetrafluoroethylene liquid;
adding amine-based compound to the polytetrafluoroethylene liquid to prepare a mixture;
heat-treating the mixture to prepare a heat-treated product; and
undergoing a washing the heat-treated product.

9. The dry binder for a rechargeable lithium battery as claimed in claim 8, wherein the solvent comprises acetone, diglyme, tetrahydrofuran, 2,2-trifluoroethanol, toluene, ethyl acetate, ethanol, 2-methoxy ethanol, methyl acetate, 1-dodecanethiol, butylamine, triethylamine, chloroform, 1-propanol, 1-hexanol, 1-octanol, tert-butanol, methyl ethyl ketone, methyl isobutyl ketone, pyridine, ethyl acetate, diethyl ether, methyl t-butyl ether, dimethyl carbonate, diethyl carbonate, or a combination thereof.

10. The dry binder for a rechargeable lithium battery as claimed in claim 8 or claim 9, wherein the heat-treating is carried out for about 10 minutes to about 30 hours.

11. An electrode for a rechargeable lithium battery, comprising:
a dry binder as claimed in any one of claims 1 to 10; and
an active material.

12. The electrode for a rechargeable lithium battery as claimed in claim 11, wherein the active material is a negative electrode active material.

13. The electrode for a rechargeable lithium battery as claimed in claim 12, wherein the negative electrode active material comprises crystalline carbon.

14. A rechargeable lithium battery, comprising;
an electrode comprising the dry binder as claimed in any one of claims 1 to 10; and an active material; and
an electrolyte.

15. The rechargeable lithium battery as claimed in claim 14, wherein the electrode is a negative electrode.
